# FASCICULE DE BREVET EUROPEEN

(11) **EP 1 493 481 B1**
(45) Date de publication et mention de la délivrance du brevet: **07.09.2016**
(21) Numéro de dépôt: 04356117.4
(22) Date de dépôt: 30.06.2004
(51) Int. Cl.: B01D 53/86, B01D 53/50, B01D 53/56, B01D 53/68

(54) **Procédé et installation d'épuration de fumées, associant deux unités de séparation et une épuration catalytique**
Verfahren und Anlage zur Reinigung von Rauchgasen mit zwei Trennungeinheiten und einer katalytischen Reinigung
Process and installation for purifying fumes combining two separation units and a catalytic purification

(30) Priorité: 01.07.2003 FR 0307968
(43) Date de publication de la demande: 05.01.2005
(73) Titulaire: LAB SA, 69007 Lyon (FR)
(72) Inventeur: Blanc, Dominique, 69007 Lyon (FR); Siret, Bernard, 69008 Lyon (FR)
(74) Mandataire: Lavoix

(56) Documents cités:
- FR-A- 2 714 303
- FR-A- 2 722 113
- FR-A- 2 751 560

## Description

La présente invention concerne un procédé pour l'épuration de fumées, associant deux unités de séparation et une épuration catalytique, ainsi qu'une installation pour la mise en oeuvre de ce procédé.

Lors d'incinération de déchets ménagers, par exemple, les fumées issues de la combustion contiennent une quantité appréciable d'éléments nocifs comme l'acide chlorhydrique HCl, le dioxyde de soufre SO₂, le trioxyde de soufre sous sa forme SO₃ ou H₂SO₄, des poussières, ainsi que des métaux lourds et des composés organiques comme les dioxines et furanes. Ces fumées contiennent également des oxydes d'azote.

Avant de pouvoir être rejetées à l'atmosphère, les fumées résultant de la combustion doivent être épurées. Plusieurs procédés peuvent être utilisés et sont proposés de manière commerciale.

Il est habituel, pour des raisons technologiques, d'effectuer séparément les opérations de dénitrification (deNOx) de celles d'élimination des autres polluants comme HCl, SO₂, SO_{3/}H₂ SO₄ et les métaux lourds.

Deux familles de technologie sont proposées en ce qui concerne la dénitrification.

On peut utiliser un procédé dit primaire, travaillant au niveau de la combustion, soit en réalisant des conditions de combustion pour lesquelles la génération d'oxydes d'azote est minimale, soit en injectant, dans une zone appropriée du foyer, un réactif comme l'ammoniac ou l'urée. Ces procédés sont peu onéreux en investissement, mais présentent cependant une efficacité trop limitée pour pouvoir respecter les réglementations les plus contraignantes.

Une seconde famille de procédés, dits secondaires, vient éliminer les oxydes d'azote après leur formation. On trouve, dans cette famille, les procédés de dénitrification sélective catalytique, ou SCR, dans lesquels les fumées à épurer passent à travers un réacteur catalytique qui réduit les oxydes d'azote, notamment au moyen d'ammoniac.

Cependant, dans sa variante usuelle, il faut veiller à protéger le catalyseur contre un certain nombre de poisons et éviter la formation de sels, comme le bisulfate d'ammonium, qui encrassent les échangeurs et le catalyseur.

Les différents procédés de dénitrification présentent également la limitation suivante. Pour obtenir des rendements d'épuration importants, un certain excès du réactif utilisé est nécessaire, ce qui se traduit par une teneur résiduelle en ammoniac NH₃ en sortie du système, produit de décomposition du réactif ou bien réactif lui-même. Pour des raisons environnementales, ainsi qu'économiques, on cherche à limiter la consommation de réactif et aussi cette fuite d'ammoniac.

Trois familles de procédés sont couramment utilisées pour l'élimination des polluants acides.

On connaît tout d'abord les procédés secs, dans lesquels on met en contact les fumées à épurer avec un réactif pulvérulent, et on récupère le produit de la réaction et l'excès de réactif, ainsi que les autres poussières dans un filtre à manches ou dans un électrofiltre.

On connaît également les procédés semi-humides, dans lesquels on atomise une bouillie contenant le réactif, qui s'évapore au contact des fumées, et on récupère le produit sec sur un filtre ou un électrofiltre.

On connaît enfin les procédés humides, dans lesquels on met en contact les fumées à épurer avec un liquide, dans un laveur.

Ces trois procédés peuvent être combinés entre eux et il n'est pas rare de voir un filtre associé à un laveur. Toutefois, aucun de ces procédés ne permet une élimination poussée des oxydes d'azote, qui soit économiquement viable.

Enfin, il est connu que, lorsqu'on utilise des procédés secs pour des taux d'épuration très élevés, de l'ordre de 99% sur l'acide chlorhydrique HCl, un excès très significatif du réactif est nécessaire, sauf à utiliser deux unités de type filtre ou électrofiltre en série, comme cela est décrit dans FR-A-2 714 303 ou FR-A-2 722 113.

Ainsi, FR-A-2 722 113, qui peut être considéré comme l'état de la technique le plus proche du procédé défini à la revendication 1 annexée, divulgue un procédé d'épuration de fumées contenant des polluants acides, comprenant les étapes suivantes :
- on alimente les fumées à épurer à un premier séparateur gaz-solides, et
- on alimente ces fumées partiellement épurées à un second séparateur gaz-solides, auquel on alimente également un réactif de neutralisation, et
- on recycle une partie des solides collectés par le second séparateur gaz-solides, vers l'amont du premier séparateur gaz-solides.

La présente invention vise à proposer un procédé intégré permettant de remédier aux inconvénients présentés plus haut.

A cet effet, elle a pour objet un procédé d'épuration de fumées contenant des polluants acides, qui comprennent l'acide chlorhydrique (HCl), le dioxyde de soufre (SO₂) et le trioxyde de soufre (SO₃/H₂SO₄), ainsi que des oxydes d'azote, tel que défini à la revendication 1.

D'autres caractéristiques de l'invention sont spécifiées aux revendications dépendantes 2 à 6. L'invention a également pour objet une installation pour la mise en oeuvre du procédé ci-dessus, telle que définie à la revendication 7.

D'autres caractéristiques de l'invention sont spécifiées aux revendications dépendantes 8 à 10.

L'invention va être décrite ci-dessous, en référence à la figure unique annexée, donnée uniquement à titre d'exemple non limitatif, qui est une représentation schématique d'une installation d'épuration des fumées conforme à l'invention.

Comme le montre cette figure, les fumées (1) issues d'un gaz de combustion, préalablement amenées à une température comprise entre 180°C et 300°C par un échangeur, un économiseur, ou tout autre moyen, contiennent des gaz acides comme l'acide chlorhydrique HCl, du dioxyde de soufre SO₂, du trioxyde de soufre sous sa forme SO₃ ou H₂SO₄, des oxydes d'azote NO, NO₂ et N₂O, des métaux lourds comme le mercure, ainsi que des composés organiques comme les dioxines et furanes. Ces fumées (1) sont alimentées à un dispositif (11), connu en tant que tel, qui est destiné à arrêter les particules incandescentes qui pourraient être portées par les fumées (1).

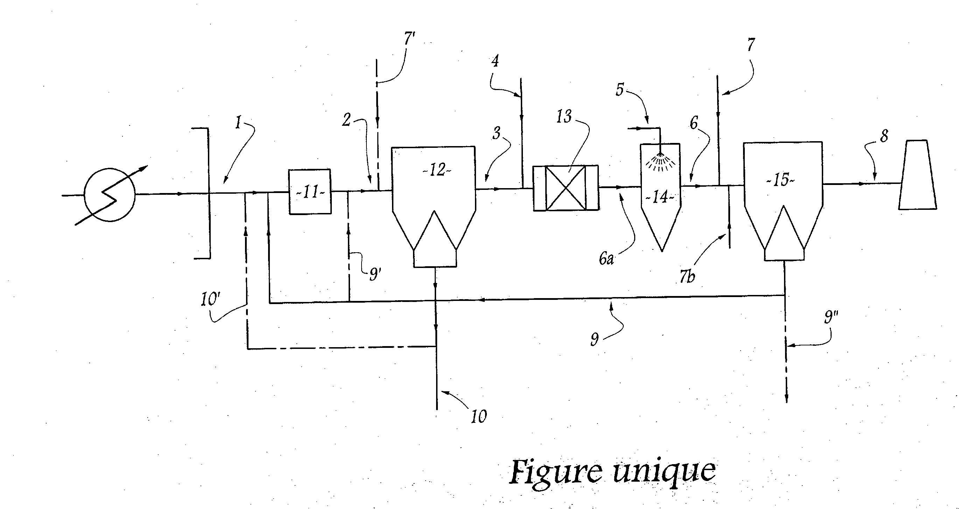

A titre d'exemple, ce dispositif (11) peut être un cyclone pare-étincelles ou un tambour. Ce dispositif reçoit également, dans l'exemple de la figure 1, les solides recyclés d'une unité située en aval et décrite ci-après.

Les fumées (2) ayant traversé ce dispositif (11) sont introduites dans un séparateur (12) gaz-solides, choisi de préférence entre un filtre à manches et un électrofiltre. Le rôle de ce séparateur est de collecter les solides constitués par les poussières initialement contenues dans les fumées (1), les produits de la réaction entre le réactif introduit en (7) et les gaz acides, ainsi que l'excès de réactif.

Ce séparateur contribue pour une part importante à l'épuration des gaz et enlève plus de 95% des matières solides contenues dans (1), plus de 70% de l'acide chlorhydrique contenu dans (1), plus de 50% du dioxyde de soufre contenu dans (1), et plus de 60% du trioxyde de soufre contenu dans (1). Ce premier séparateur a pour fonction essentielle de pré-épurer très significativement les fumées pour protéger le catalyseur, intervenant dans (13), à l'égard des poussières ou des sels encrassants comme (NH₄)₂SO₄ et (NH₄)HSO₄. Ces sels sont formés à partir du trioxyde de soufre ou de l'acide sulfurique déjà présent ou résultant de l'oxydation de SO₂ et de l'ammoniac présent dans le système catalytique (13).

Ce séparateur opère à une température supérieure au point de rosée acide des fumées (1) et inférieure à de 300°C, de préférence comprise entre 180°C et 250°C. Les solides collectés (10) sont évacués ou éventuellement partiellement recyclés en amont du dispositif de protection (11), comme illustré par la ligne (10') en traits mixtes. Ces solides peuvent également être recyclés directement en amont de l'unité (12).

Les fumées dépoussiérées (3), débarrassées de la majeure partie des polluants acides, sont ensuite mélangées avec un réactif de dénitrification (4) pouvant être de l'ammoniac, une solution ammoniacale, de l'urée ou une amine.

Le mélange des fumées (3) et du réactif (4) est alimenté à un réacteur de dénitrification catalytique (13), dit SCR, d'une technologie connue en soi. Le produit de la décomposition du réactif (4) étant dans la plupart des cas de l'ammoniac NH₃, il est connu qu'en présence d'une quantité suffisante d'oxydes de soufre, des sels comme le sulfate d'ammonium ((NH₄)SO₄) et le bisulfate d'ammonium (NH₄ HSO₄) peuvent se former et se déposer sur le catalyseur ou sur des parties annexes, dégradant les performances du système. D'autres poussières peuvent également endommager le catalyseur, et c'est un rôle majeur du séparateur (12) que d'empêcher ces composés ou leurs précurseurs d'atteindre le système (13).

Les fumées (6a) sortant du réacteur de dénitrification (13) sont ensuite refroidies dans une unité (14), par exemple par évaporation d'eau (5), à une température comprise entre 90°C et 180°C, de préférence entre 120°C et 150°C. Ces fumées refroidies (6) sont alors mélangées à un réactif de neutralisation (7) et de manière optionnelle à des additifs (7b), avant d'être admises dans un second séparateur gaz-solides (15).

Le réactif (7) est choisi notamment parmi la famille de la chaux, de la magnésie, du bicarbonate de sodium, du carbonate de sodium ou d'un mélange de ces produits. Les additifs optionnels (7b) peuvent par exemple du coke de lignite, du charbon actif, ou des zéolithes.

Le séparateur (15) a pour objet de terminer l'épuration des gaz et d'éliminer les solides, constitués principalement du réactif (7) et des produits de ses réactions, ainsi que des éventuels additifs (7b). Les fumées épurées (8) sortant de ce séparateur contiennent au plus 2% de l'acide chlorhydrique initialement contenu dans (1) et au plus 5% du dioxyde de soufre contenu dans (1).

Ce séparateur, dans la variante préférée, est un filtre à manches, mais peut être également un électrofiltre. Les solides collectés sont recyclés par la ligne (9) vers le dispositif de protection (11) ou bien, dans une autre variante, directement au premier séparateur (12) par la ligne (9') en traits mixtes.

De manière optionnelle, une partie des solides collectés, n'excédant pas 20% du flux (9), peut être directement évacuée par la ligne (9"), représentée également en traits mixtes. Cette mesure permet de déconcentrer les solides circulant dans la ligne (9) en certains polluants, tels le mercure.

Le séparateur (15) capte également une fraction de l'ammoniac contenu dans (6), réduisant ainsi la fuite d'ammoniac présente dans les fumées épurées (8). Cet ammoniac capté est ainsi recyclé par le biais du flux (9).

Une autre caractéristique du procédé est que, dans la variante préférée, la totalité du réactif de neutralisation est apportée au niveau du séparateur (15), à un endroit du procédé où les fumées sont déjà notablement épurées. Ainsi, un excès stoechiométrique important existe au niveau du séparateur (15), et le flux de résidus recyclé (9) est encore très riche en réactif non utilisé. De cette façon, la quantité de réactif globale est moindre que dans un système avec un seul séparateur, du type filtre à manches.

Selon l'invention, le séparateur (12) opère à une température nettement supérieure à celle du séparateur (15). Le risque de prise en masse ou d'agglomération de solides qui existerait dans le cas d'une simple recirculation entre les deux unités, comme décrit dans FR-A-2 722 113, se trouve ainsi sensiblement supprimé.

Dans une autre variante d'exécution, le premier séparateur gaz-solides (12) reçoit également un réactif de neutralisation choisi dans la même famille que (7), par l'intermédiaire de la ligne d'appoint (7') représentée en traits mixtes.

Il est à noter qu'un des avantages apportés par l'invention est que, comme le catalyseur est protégé, la gestion de ce catalyseur est facilitée. On peut ainsi :
- soit opérer pendant plus longtemps, tout en conservant une fuite d'ammoniac tolérable, puisque le second séparateur capte une partie de la fuite d'ammoniac,
- soit installer un volume moindre pour le catalyseur, celui-ci se désactivant moins vite du fait de la protection.

### EXEMPLE

L'exemple suivant aide à mieux comprendre l'invention. Les mesures des flux et des équipements sont ceux de la figure unique.

Les fumées issues d'un incinérateur (1), d'un débit total de 60000 kg/h, contiennent avant traitement 60 kg/h d'HCl, 9 kg/h de SO₂ et 180 g/h de SO₃/H₂SO₄ et entrent dans le premier séparateur à 210°C, après avoir traversé un tambour (11). Elles contiennent 450 mg/Nm³ d'oxyde d'azote. Réagissant avec l'excès de réactif recyclé par (9), les fumées (3) sont débarrassées de 90% d'acide chlorhydrique (HCl), de 70% de dioxyde de soufre (SO₂) et de 85% de trioxyde de soufre (SO₃/H₂SO₄).

Avant le filtre (12), les fumées contiennent 3 ppm poids de SO₃. En l'absence du traitement effectué par ce filtre, compte-tenu de la température faible, on se trouverait dans une zone dangereuse pour les dépôts des sels d'ammonium, dans le réacteur SCR (13).

Ce réacteur SCR effectue une dénitrification assez poussée à l'ammoniaque aqueux à 19% poids et laisse donc passer une fuite d'ammoniac de 10 ppm poids. Une faible fraction, 1% de SO₂, est convertie en SO₃. Dans ces conditions, le risque de dépôt de sel a été très considérablement réduit, l'épuration préalable réalisée par (12) ayant réduit fortement la teneur en SO₃.

| **Flux** | | **1** | **3** | **6a** | **8** | **7** |
|---|---|---|---|---|---|---|
| HCl | Kg/h | 60 | 6 | 6 | | |
| SO₂ | Kg/h | 9 | 2,7 | 2,673 | 0,807 | |
| SO₃/H₂SO₄ | Kg/h | 0,18 | 0,027 | 0,054 | 0,006 | |
| NH₃ | mg/Nm³ | 0 | 0 | 10 | 6 | |
| NOx | mg/Nm³ | 450 | 450 | 60 | 60 | |
| Ca(OH)₂ | Kg/h | | | | | 100 |
| Température | °C | 210 | 210 | 210 | 140 | 25 |
| Ratio Stoechiométrique | | **Au filtre 12** | **Au filtre 15** | | | |
| | | 1,40 | 10, 89 | | | |

Les fumées sont refroidies à 160°C par injection d'eau. 100 kg/h de chaux sont introduits pour neutraliser les gaz par (7). Ceci correspond à un ratio stoechiométrique de 10.89 au filtre 15 et de 1.40 au filtre 12.

Dans ce cas, au final, l'invention a apporté le bénéfice d'une protection du catalyseur contre l'encrassement, une réduction de la fuite d'ammoniac et la possibilité, par l'utilisation des deux filtres, d'épurer de manière poussée à un ratio stoechiométrique bas, sans risque de prise en masse des solides au niveau du filtre 12.

## Revendications

1. Procédé d'épuration de fumées contenant des polluants acides, qui comprennent l'acide chlorhydrique (HCl), le dioxyde de soufre (SO₂) et le trioxyde de soufre (SO₃/H₂SO₄), ainsi que des oxydes d'azote, **caractérisé en ce qu'**il comprend les étapes suivantes :
- on alimente les fumées à épurer (1, 2), à une première température comprise entre 180°C et 300°C, de préférence entre 200°C et 250°C, à un premier séparateur gaz-solides (12), de type filtre ou électrofiltre, dans lequel on capte au moins 70% de l'acide chlorhydrique, au moins 50% du dioxyde de soufre et au moins 60% du trioxyde de soufre initialement présents dans les fumées à épurer (1, 2)
- on mélange ces fumées partiellement épurées (3) à un réactif de dénitrification (4), et on alimente le mélange ainsi obtenu à un réacteur (13) de dénitrification sélective catalytique
- on envoie les fumées dénitrifiées (6a) dans une unité de refroidissement (14) de manière à les refroidir, jusqu'à les amener à une seconde température qui est strictement inférieure à ladite première température et qui est comprise entre 90 et 180°C, de préférence entre 120 et 150°C
- on alimente les fumées refroidies (6) à un second séparateur gaz-solides (15), auquel on alimente également un réactif de neutralisation (7), notamment de la chaux, de la magnésie, du carbonate de sodium ou du bicarbonate de sodium ; et
- on recycle (par 9) au moins une majeure partie des solides collectés par le second séparateur gaz-solides (15), vers l'amont du premier séparateur gaz-solides (12).

2. Procédé d'épuration selon la revendication 1, **caractérisé en ce qu'**on dirige les fumées à épurer (1) vers un dispositif de protection (11) contre les particules incandescentes, de type tambour ou cyclone pare-étincelles, avant de les alimenter au premier séparateur gaz-solides (12), et **en ce qu'**on recycle au moins une majeure partie des solides collectés par le second séparateur gaz-solides (15) en amont de ce dispositif de protection (11).

3. Procédé d'épuration selon la revendication 1 ou 2, **caractérisé en ce qu'**on évacue (par 9') une fraction minoritaire des solides collectés par le second séparateur gaz-solides (15), cette fraction minoritaire étant inférieure à 30%, de préférence à 20%, de la fraction majoritaire recyclée (par 9) en amont du premier séparateur gaz-solides (12).

4. Procédé d'épuration selon l'une quelconque des revendications précédentes, **caractérisé en ce qu'**on refroidit les fumées dénitrifiées (6a) dans l'unité de refroidissement (14) par évaporation d'eau (5).

5. Procédé d'épuration selon l'une quelconque des revendications précédentes, **caractérisé en ce qu'**on recycle (par 10'), vers l'amont du premier séparateur gaz-solides (12), une partie des solides (10) collectés par ce premier séparateur gaz-solides (12).

6. Procédé d'épuration selon l'une quelconque des revendications précédentes, **caractérisé en ce qu'**on admet un appoint (7') de réactif de neutralisation dans le premier séparateur gaz-solides (12), en même temps que les fumées à épurer (1, 2).

7. Installation d'épuration de fumées pour la mise en oeuvre du procédé conforme à l'une quelconque des revendications précédentes, comprenant :
- des moyens d'alimentation des fumées à épurer (1, 2),
- un premier séparateur gaz-solides (12), dans lequel débouchent les moyens d'alimentation en fumées à épurer,
- des moyens (13) de dénitrification des fumées partiellement épurées, mis en communication avec le premier séparateur (12),
- des moyens (14) de refroidissement des fumées dénitrifiées, disposées en aval des moyens de dénitrification,
- un second séparateur gaz-solides (15), placé en aval des moyens de refroidissement (14), et
- des moyens (9) de recyclage, vers l'amont du premier séparateur gaz-solides (12), aptes à recycler au moins une majeure partie des solides (10) collectés dans le s.econd séparateur gaz-solides (15).

8. Installation d'épuration selon la revendication 7, **caractérisée en ce qu'**elle comprend également un dispositif (11) de protection contre les particules incandescentes présentes dans les fumées à épurer (1, 2), de type tambour ou cyclone pare-étincelles, ce dispositif de protection (11) étant placé en amont du premier séparateur gaz-solides (12), les moyens de recyclage (9) débouchant en amont de ce dispositif de protection (11).

9. Installation d'épuration selon la revendication 7 ou 8, **caractérisée en ce qu'**elle comprend également des moyens (9') d'évacuation d'une fraction minoritaire des solides collectés dans le second séparateur gaz-solides (15).

10. Installation d'épuration selon l'une quelconque des revendications 7 à 9, **caractérisée en ce qu'**elle comprend également des moyens (10') supplémentaires de recyclage, vers l'amont du premier séparateur gaz-solides (12), d'une partie des solides (10) collectés dans ce premier séparateur gaz-solides (12).

## Patentansprüche

1. Verfahren zum Reinigen von Rauchgasen, die Chlorwasserstoffsäure (HCl), Schwefeldioxid (SO₂) und Schwefeltrioxid (SO₃/H₂SO₄) sowie Stickoxide aufweisende säurehaltige Schadstoffe enthalten, **dadurch gekennzeichnet, dass** es die folgenden Schritte aufweist:
- Zuführen der zu reinigenden Rauchgase (1, 2) bei einer ersten Temperatur, die zwischen 180°C und 300°C, vorzugsweise zwischen 200°C und 250°C liegt, in einen ersten Gas-Feststoff-Abscheider (12) des Filter- oder Elektrofiltertyps, in dem mindestens 70% der Chlorwasserstoffsäure, mindestens 50% des Schwefeldioxids und mindestens 60% des Schwefeltrioxids, die sich anfangs in den zu reinigenden Rauchgasen (1, 2) befinden, eingefangen werden,
- Mischen der teilweise gereinigten Rauchgase (3) mit einem Denitrifikationsreagens (4) und Zuführen des auf diese Weise erhaltenen Gemischs in einen Reaktor (13) zur selektiven katalytischen Denitrifikation,
- Schicken der denitrifizierten Rauchgase (6a) in eine Kühleinheit (14), um sie zu kühlen, bis sie eine zweite Temperatur erreichen, die streng niedriger als die erste Temperatur ist, und die zwischen 90°C und 180°C, vorzugsweise zwischen 120°C und 150°C liegt,
- Zuführen der gekühlten Rauchgase (6) in einen zweiten Gas-Feststoff-Abscheider (15), dem ferner ein Neutralisierungsreagens (7), insbesondere Kalk, Magnesia, Natriumkarbonat oder Natriumbikarbonat zugeführt wird, und
- Rezirkulieren (über 9) von zumindest einem überwiegenden Teil der durch den zweiten Gas-Feststoff-Abscheider (15) gesammelten Feststoffe nach stromaufwärts des ersten Gas-Feststoff-Abscheiders (12).

2. Reinigungsverfahren gemäß Anspruch 1, **dadurch gekennzeichnet, dass** die zu reinigenden Rauchgase (1) zu einer Vorrichtung (11) des Trommel- oder Funkenfänger-Zyklontyps zum Schutz vor glühenden Teilchen geleitet werden, bevor sie dem ersten Gas-Feststoff-Abscheider (12) zugeführt werden, und dass zumindest ein überwiegender Teil der durch den zweiten Gas-Feststoff-Abscheider (15) gesammelten Feststoffe nach stromaufwärts der Schutzvorrichtung (11) rezirkuliert wird.

3. Reinigungsverfahren gemäß Anspruch 1 oder 2, **dadurch gekennzeichnet, dass** ein minoritärer Anteil der durch den zweiten Gas-Feststoff-Abscheider (15) gesammelten Feststoffe (über 9') evakuiert wird, wobei dieser minoritäre Anteil kleiner als 30%, vorzugsweise kleiner als 20%, des (über 9) nach stromaufwärts vom ersten Gas-Feststoff-Abscheider (12) rezirkulierten überwiegenden Anteils ist.

4. Reinigungsverfahren gemäß irgendeinem der vorhergehenden Ansprüche, **dadurch gekennzeichnet, dass** die denitrifizierten Rauchgase (6a) in der Kühleinheit (14) durch Wasserverdunstung (5) gekühlt werden.

5. Reinigungsverfahren gemäß irgendeinem der vorhergehenden Ansprüche, **dadurch gekennzeichnet, dass** ein Teil der durch den ersten Gas-Feststoff-Abscheider (12) gesammelten Feststoffe (10) nach stromaufwärts des ersten Gas-Feststoff-Abscheiders (12) (über 10') rezirkuliert wird.

6. Reinigungsverfahren gemäß irgendeinem der vorhergehenden Ansprüche, **dadurch gekennzeichnet, dass** gleichzeitig mit den zu reinigenden Rauchgasen (1, 2) ein Neutralisierungsreagens-Zusatz (7') in den ersten Gas-Feststoff-Abscheider (12) eingelassen wird.

7. Einrichtung zum Reinigen von Rauchgasen zum Durchführen des Verfahrens gemäß irgendeinem der vorhergehenden Ansprüche, aufweisend:
- Mittel zum Zuführen der zu reinigenden Rauchgase (1, 2),
- einen ersten Gas-Feststoff-Abscheider (12), in den die Mittel zum Zuführen von zu reinigenden Rauchgasen einmünden,
- Mittel (13) zur Denitrifikation der teilweise gereinigten Rauchgase, die mit dem ersten Abscheider (12) kommunizieren,
- Mittel (14) zum Kühlen der denitrifizierten Rauchgase, die stromabwärts von den Denitrifikationsmitteln angeordnet sind,
- einen zweiten Gas-Feststoff-Abscheider (15), der stromabwärts von den Kühlmitteln (14) platziert ist, und
- Mittel (9) zum Rezirkulieren nach stromaufwärts des ersten Gas-Feststoff-Abscheiders (12), die geeignet sind, mindestens einen überwiegenden Teil der in dem zweiten Gas-Feststoff-Abscheider (15) gesammelten Feststoffe (10) zu rezirkulieren.

8. Reinigungseinrichtung gemäß Anspruch 7, **dadurch gekennzeichnet, dass** sie ferner aufweist: eine Vorrichtung (11) zum Schutz vor glühenden Teilchen, die in den zu reinigenden Rauchgasen (1, 2) vorhanden sind, des Trommel- oder Funkenfänger-Zyklontyps, wobei diese Schutzvorrichtung (11) stromaufwärts von dem ersten Gas-Feststoff-Abscheider (12) platziert ist, wobei die Rezirkulationsmittel (9) stromaufwärts von dieser Schutzvorrichtung (11) einmünden.

9. Reinigungseinrichtung gemäß Anspruch 7 oder 8, **dadurch gekennzeichnet, dass** sie ferner Mittel (9') zum Evakuieren eines minoritären Anteils der in dem zweiten Gas-Feststoff-Abscheider (15) gesammelten Feststoffe aufweist.

10. Reinigungseinrichtung gemäß irgendeinem der Ansprüche 7 bis 9, **dadurch gekennzeichnet, dass** sie ferner zusätzliche Mittel zum Rezirkulieren (10') eines Teils der in dem ersten Gas-Feststoff-Abscheider (12) gesammelten Feststoffe (10) nach stromaufwärts des ersten Gas-Feststoff-Abscheiders (12) aufweist.

## Claims

1. Method for treating fumes containing acid pollutants, which include hydrochloric acid (HCl), sulfur dioxide (SO₂) and sulfur trioxide (SO₃/HSO₄), as well as nitrogen oxides, **characterised in that** it comprises the following steps:
- feeding the fumes to be treated (1, 2) at a first temperature of between 180 °C and 300 °C, preferably between 200 °C and 250 °C, into a first filter-like or electrofilter-like gas-solids separator (12), in which at least 70 % of the hydrochloric acid, at least 50 % of the sulphur dioxide and at least 60 % of the sulphur trioxide initially present in the fumes to be treated (1, 2) are collected;
- mixing said partially treated fumes (3) with a denitrification reagent (4) and feeding the mixture thus obtained into a selective catalytic denitrification reactor (13);
- delivering the denitrified fumes (6a) into a cooling unit (14) so as to cool said fumes until they are brought to a second temperature that is strictly lower than said first temperature and which is between 90 and 180 °C, preferably between 120 and 150 °C;
- feeding the cooled fumes (6) into a second gas-solids separator (15), into which a neutrilisation reagent (7) is also fed, in particular calcium hydroxide, magnesia, sodium carbonate or sodium bicarbonate; and
- recirculating (via 9) at least a large proportion of the solids collected by the second gas-solids separator (15) to upstream of the first gas-solids separator (12).

2. Treatment method according to claim 1, **characterised in that** the fumes to be treated (1) are directed towards a device (11) for protecting against drum-type or cyclone spark-type incandescent particles, before said fumes are fed into the first gas-solids separator (12), and **in that** at least a large proportion of the solids collected by the second gas-solids separator (15) are recirculated upstream of said protection device (11).

3. Treatment method according to either claim 1 or claim 2, **characterised in that** a small fraction of the solids collected by the second gas-solids separator (15) are evacuated (via 9'), said minor fraction being less than 30 %, preferably less than 20 %, of the large fraction recirculated (via 9) upstream of the first gas-solids separator (12).

4. Treatment method according to any of the preceding claims, **characterised in that** the denitrified fumes (6a) are cooled in the cooling unit (14) by water evaporation (5).

5. Treatment method according to any of the preceding claims, **characterised in that** some of the solids (10) collected by the first gas-solids separator (12) are recirculated (via 10') to upstream of said first gas-solids separator (12).

6. Treatment method according to any of the preceding claims, **characterised in that** an added portion (7') of neutralisation reagent is introduced into the first gas-solids separator (12) at the same time as the fumes to be treated (1, 2).

7. Fumes treatment plant for carrying out the method according to any of the preceding claims, comprising:
- means for feeding the fumes to be treated (1, 2);
- a first gas-solids separator (12), into which the means for feeding the fumes to be treated lead;
- means (13) for denitrifying the partially treated fumes, in communication with the first separator (12);
- means (14) for cooling the denitrified fumes, arranged downstream of the denitrification means;
- a second gas-solids separator (15) placed downstream of the cooling means (14); and
- means (9) for recirculating to upstream of the first gas-solids separator (12), which means are capable of recirculating at least a large proportion of the solids (10) collected in the second gas-solids separator (15).

8. Fumes treatment plant according to claim 7, **characterised in that** it further comprises a device (11) for protecting against drum-type or cyclone spark-type incandescent particles present in the fumes to be treated (1, 2), said protection device (11) being placed upstream of the first gas-solids separator (12), the recirculation means (9) opening upstream of said protection device (11).

9. Treatment plant according to either claim 7 or claim 8, **characterised in that** it further comprises means (9') for evacuating a small fraction of the solids collected in the second gas-solids separator (15).

10. Treatment plant according to any of claims 7 to 9, **characterised in that** it further comprises additional means (10') for recirculating, to upstream of the first gas-solids separator (12), some of the solids (10) collected in said first gas-sol ids separator (12).
